# EUROPÄISCHE PATENTSCHRIFT

(11) **EP 0 793 568 B1**
(45) Veröffentlichungstag und Bekanntmachung des Hinweises auf die Patenterteilung: **21.02.2001**
(21) Anmeldenummer: 96930003.7
(22) Anmeldetag: 23.09.1996
(51) Int. Cl.: B29C 47/08, B29C 47/46

(54) **LAGERUNG DER ANTRIEBSWELLEN EINER SCHNECKENPRESSE**
BEARING ARRANGEMENT FOR THE DRIVE SHAFTS OF A WORM EXTRUDER
PALIER POUR ARBRES PRIMAIRES D'EXTRUDEUSE A VIS

(30) Priorität: 21.09.1995 CH 271795
(43) Veröffentlichungstag der Anmeldung: 10.09.1997
(73) Patentinhaber: ANTOGI AG, 9493 Mauren (LI)
(72) Erfinder: ZIMMERMANN, Anton, CH-4583 Mühlendorf (CH)
(74) Vertreter: Arato, Laszlo
(86) Internationale Anmeldenummer: CH9600326
(87) Internationale Veröffentlichungsnummer: WO9710939

(56) Entgegenhaltungen:
- EP-A- 0 595 112
- WO-A-94/02303
- US-A- 3 702 691
- US-A- 4 237 714

## Beschreibung

Die Erfindung betrifft die Lagerung der Antriebswellen einer Schneckenpresse gemäss den kennzeichnenden Merkmalen des Anspruches 1.

Schneckenpressen dienen dem kontinuierlichen Fördern, Mischen, Trennen, Kneten und/oder Zerlegen von Stoffen verschiedenster Art. Mit Ausnahme der einfachen Ausführung, die kein Gegenstand der Erfindung ist, handelt es sich dabei um Zwei- oder Mehrschneckenpressen, deren Schnecken sich mehr oder weniger kämmen, gleich- oder gegensinnig drehen und ihrer Steigung entsprechend das Pressgut in, oder mindestens abschnittsweise gegen die Förderrichtung verschieben. Die freie Wahl und die freie Kumulierung dieser Merkmale ist für die Entwicklung neuer Technologien äusserst wünschenswert. Der gestalterischen Freiheit setzen aber die Randbedingungen des Antriebes enge Grenzen. So gilt für die Schneckengepmetrie als massgebende Limite die Gestaltung des Achsabstandes der Schneckengetriebe A = (D+d)/2 (d= Kern- und D= Aussendurchmesser der Schnecken), und für den grössten Aussendurchmesser der Schneckenlager A = D_{ALmax}. Damit die zwei Lager nebeneinander im Schneckengetriebe Platz haben, muss der grösste Lageraussendurchmesser D_{ALmax} kleiner, oder gleich gross als der Achsabstand der Schnecken (D_{ALmax} < A) sein. Da der Lagerinnendurchmesser (Dᵢ) sinnvollerweise gleich gross oder grösser als der Kerndurchmesser der Schnecke (Di > d) gewählt wird, ist die Grösse des grössten Lagers auf die Abmessungen D_{Lmax}=d beschränkt. Die Akzeptierung dieser Grenze schliesst die Leistungsteigerung und somit die Steigerung des Drehmomentes der Antriebe der Schneckenpressen aus. Die Ignorierung der Limiten führt als Folge der Überlastung der Wellen und/oder der Lagerung durch die Walzkräfte unvermeidlich zum Maschinenbruch.

Die vorliegende Erfindung stellt sich die Aufgabe, die genannten Hindernisse der Leistungssteigerung zu beseitigen. Der Erfindung liegt daher die Aufgabe zugrunde, den Betriebsdruck und somit die Belastbarkeit der Schnecken- und Getriebewellen und deren Lagerung, trotz des Platzmangels wegen dem engen Achsabstand der parallelen Schneckenwellen, so zu steigern, dass trotz erhöhten Walzkräften die Verfügbarkeit der Schneckenpressen deutlich verbessert wird.

Erfindungsgemäss wird diese Aufgabe durch die kennzeichnenden Merkmale des Anspruchs 1 gelöst.

Die durch die Erfindung erreichten Vorteile sind vielfälltig. Beispielsweise für die als RETRUDER genannte, dichtkämmende und mit Gegendrall und Rückförderung betriebene Doppelschneckenpresse, die Dank hohen Drücken und hohen Schärkräften sich beispielsweise für die Aufschliessung, Zerfaserung und Imprägnierung von nachwachsenden Rohstoffen besonders eignet, hat die Erfindung die Voraussetzungen für den störungsfreien Betrieb geschaffen. Die vorgeschlagenen Stützrollen nehmen die in der gemeinsamen Ebene der Schnecken entgegengesetzt wirkenden radialen Walzkräfte auf. Die Stützrollen verhindern das Durchbiegen und Klemmen der Antriebswellen der Schneckenpresse, entlasten ihre Lager und die Lager der Antriebsgetriebe. Dank der Stützrollenlager wird die Reduktion der Belastung und somit die Tragzahl und die Aussenabmessungen der Lager verringert, und die Möglichkeit der Vergrösserung des Antriebswellendurchmessers der Schnecken erreicht. Die vorgeschlagene schwenkbare Lagerung der Stützrollen erlaubt die einfache Montage und Demontage, sowie die Wartung des Aggregates. Die gegenseitige Verspannung der Fassungen der Stützrollen mit Spannschrauben ermöglicht die Einstellung einer Vorspannung der Antriebswellen. Dank sphärischer Stützung der Spannschrauben wird die Verspannung der Stützrollen mit den Antriebswellen ohne Verklemmung der Teile möglich. Diese Harmonie der vorgeschlagenen Konstruktion wird mit der Symmetrie der Vorspannung perfekt. Sie lässt sich mit der Einstellung der Zugspannung der Schrauben mit Hilfe von Drehmomentenschlüssel einfach erreichen.

Im folgenden wird die Erfindung anhand einer Ausführungsweg darstellenden Zeichnung näher erläutert. Es zeigt:
- Fig.1: den Längsschnitt einer Schneckenpresse,
- Fig.2: den Querschnitt der Schneckenpresse der Fig.1,
- Fig.3: einen Querschnitt der Antriebswellen mit den Stützrollenlagern,
- Fig.4: einen Teilgrundriss der Antriebswellen mit den Stützrollenlagern der Fig.3

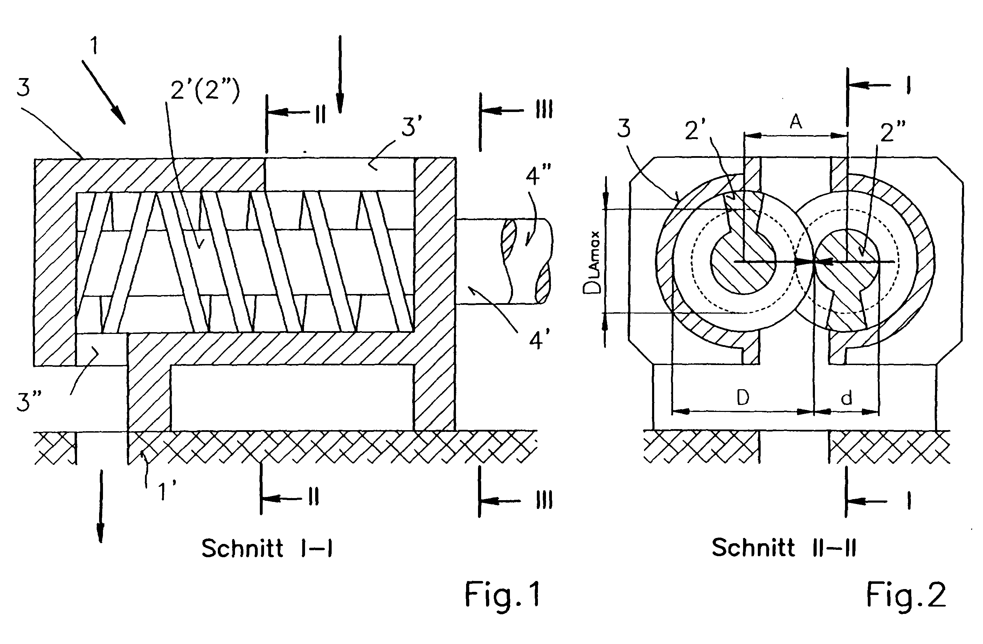

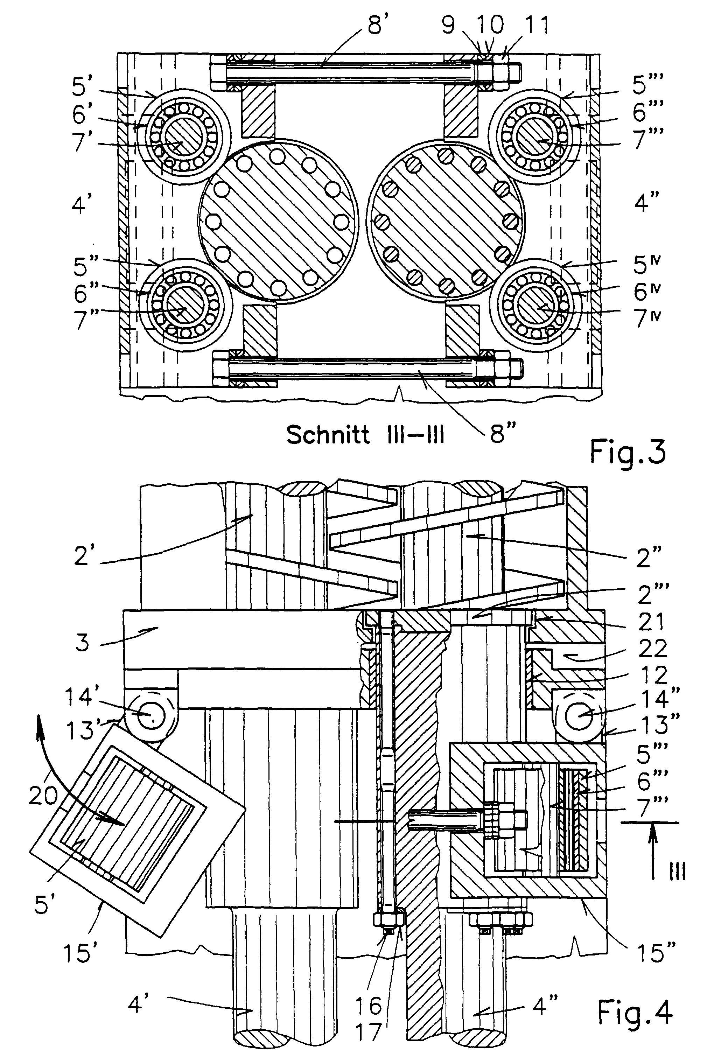

Die in Fig. 1 gezeigte Schneckenpresse 1 stütz sich auf das Fundament 1 und besteht aus dem Schneckengehäuse 3, den Schnecken 2',2" den Antriebswellen 4',4" und dem an die Antriebswellen angeschlossenen, nicht gezeigten Pressenantrieb mit Reduktionsgetriebe, entsprechend Schnitt I-I der Figur 2. Zum Passieren des Pressgutes weist das Schneckengehäuse 3 eine Aufgabenöffnung 3'und eine Austrittsöffnung 3 auf. In Figur 2 ist entsprechend dem Schnittverlauf II-II der Figur 1, der Querschnitt der Schneckenpresse 1 dargestellt. Dort ist auch die Achsdistanz A der beiden Schnecken 2',2" und der grösste Lageraussendurchmesser D_{LAmax} dargestellt, der praktisch identisch mit dem Flanschdurchmesser der Schneckenkupplung 2"' der Figur 4 ist. Sobald Pressgut zu den Schnecken und somit zwischen die Schnecken gelangt, greifen die gegeneinander gerichteten Walzenkräfte am Berührungspunkt des Schneckenkerndurchmessers d/D in der gemeinsamen Ebene der Schneckenachsen an. In Figur 3 ist der Schnittverlauf III-III der Figuren 1 und 4 zu sehen, mit den geschnittenen Antriebswellen 4',4", den Schnecken 2',2" und den an die Antriebswellen 4',4" aufliegenden Stützrollen 5^{I} bis 5^{IV}, mit den jeweils zugehörenden Stützrollenachsen 6^{I} bis 6^{IV} und den Stützrollenlagern 7^{I} bis 7^{IV} . Der zur Fig.3 passende Grundriss ist in Figur 4, mit den Schnecken 2',2" und den Antriebswellen 4',4" dargestellt.

Die Verbindung der Schnecke 2", mit der Antriebswelle 4" wird mit den Dehnschrauben 16 und der Kontramuttern 17 in den Kupplungsflansch 2"' der Schnecke 2" vorgenommen, Die gemeinsame Lagerung der Schnecke 2" mit der Antriebswelle 4" geschieht im Gleitlager 12 in der Rückwand des Schneckengehäuses 3. Um den Umfang des Antriebsflansches 2" befindet sich der Ringspalt 21, der mit dem Kanal 22 des Schneckengehäuses 3 kommuniziert. Durch diese Kavitäten (21,22) wird das verirrte Pressgut, das ansonst die Lager 12 gefährden würde ausgeschieden. Die vorgeschlagene Konstruktion ist Platzsparend und erwiesenermassen wesentlich zuverllässiger als die Dichtungen der Stand der Technik. Mit den Bolzen 14',14" und den Scharnieren 13',13" sind die Fassungen 15',15" der Stützrollen 5^{I} bis 5^{IV}, (wie der Pfeil 20 und der Fassung 15'zeigt), schwenkbar verbunden. Die Scharniere 13',13" und die Bolzen 14',14" sind mit reichlich Spiel versehen so, dass die Stützrollen 5^{I}-5^{IV} eine Plazierung aber keine Zuordnung zu der Schwenkvorrichtung erfahren. Die Stützrollen 5^{I} bis 5^{IV} orientieren sich daher frei von der Schwenkvorrichtung, unmittelbar an den zu stützenden Antriebswellen 4',4". Damit die Stützrollen 5^{I} bis 5^{IV} ohne Klemmen an die Antriebswellen 4',4" pressen, sind die Spannschrauben 8',8"(mit Kugelscheiben 9 und Kugelpfannen 10) sphärischen gelagert. Die Schnecken 2', 2" und die Antriebswellen 4',4" belasten daher die Lager 12.(12") der Schneckenpresse 1 und die Lager der nicht dargestellten Antriebsgetriebe im wesentlichen nur mit ihrer Masse nicht aber mit der wesentlich grösseren Betriebslast der Walzenkräfte.

Da das Wechseln der Schnecken keinen Ausbau der Lager bedingt, weist die vorliegende Erfindung den Weg für pflegeleichte Schneckenpressen. Solche Schneckenpressen eignen sich für Betriebe mit veränderlichen Anforderungen der Produktion, wie für die Entwicklung neuer Technologien, wo das Wechseln der Schnecken wegen den Variationen ihrer Geometrie häufig ist.

## Patentansprüche

1. Lagerung der Antriebswelle (4',4") einer Zwei- oder Mehrschneckenpresse (1) zur Aufnahme der Walzkräfte der Schnecken (2',2"), die im Betrieb in der Ebene der Schneckenachsen entstehen, symmetrisch und einander entgegengesetzt sind und senkrecht auf die Schneckenachsen wirken, gekennzeichnet durch Stützrollen (5^{I}-5^{IV}) die am Umfang der Antriebswellen (4',4") liegen und um diese so angeordnet sind, dass sie jede radiale Verschiebung der Antriebswelle verhindern.

2. Lagerung nach Anspruch 1, dadurch gekennzeichnet, dass die Stützrollen (5^{I}-5^{IV}) um je einen Bolzen (14',14"), der zu der gemeinsame Ebene der Schneckenachsen senkrecht steht, schwenkbar sind.

3. Lagerung nach Anspruch 1 und 2 dadurch gekennzeichnet, dass jede Stützrolle (5^{I}-5^{IV}) in einer Fassung (15',15") gelagert ist.

4. Lagerung nach Anspruch 3 dadurch gekennzeichnet, dass die in den Fassungen (15',15") gelagerten Stützrollen (5^{I}-5^{IV}) mit Spannschrauben (8',8") spannbar sind.

5. Lagerung nach Anspruch 4 dadurch gekennzeichnet, dass die Spannschrauben (8',8") der Stützrollen (5^{I}-5^{IV}) mit Kugelscheiben (9) und Kugelpfannen (10) sphärisch gelagert sind.

6. Lagerung nach Anspruch 1 bis 5 dadurch gekennzeichnet, dass die Endung der Schneckenwelle (2',2") als Flansch (2"') ausgebildet ist.

7. Lagerung nach Anspruch 1 bis 6 dadurch gekennzeichnet, dass zur Verbindung der Antriebswelle (4',4") mit der Schnecke (2',2") Dehnschrauben (16) dienen.

8. Lagerung nach Anspruch 6 dadurch gekennzeichnet, dass zwischen dem Flansch (2"') der Schneckenwelle (2',2") und dem Schneckengehäuse (3) ein Ringspalt (21) liegt.

9. Lagerung nach Anspruch 8 dadurch gekennzeichnet, dass die Rückwand des Schneckengehäuses (3) über einen Kanal (22) verfügt und, dass der Kanal (22) mit dem Ringspalt (21) verbunden ist.

10. Lagerung nach Anspruch 9 dadurch gekennzeichnet, dass der Kanal (22) der Schneckengehäuse (3) mindestens über einen Abfluss verfügt.

## Claims

1. A bearing arrangement for the drive shaft (4', 4") of a double or multiple worm extruder (1), said bearing arrangement being designed to absorb the rolling forces of the worms (2', 2") which are generated in the plane of the worm axes during operation, are symmetrical and mutually opposed and act perpendicularly on the worm axes, characterized by supporting rollers (5^{I} - 5^{IV}) which lie against the periphery of the drive shafts (4', 4") and are arranged about these latter such that they prevent any radial displacement of the drive shaft.

2. A bearing arrangement according to Claim 1, characterized in that the supporting rollers (5^{I} to 5^{IV}) are pivotal about a respective pin (14', 14") which is perpendicular to the common plane of the worm axes.

3. A bearing arrangement according to Claims 1 and 2, characterized in that each supporting roller (5^{I} - 5^{IV}) is held in a mounting (15', 15").

4. A bearing arrangement according to Claim 3, characterized in that the supporting rollers (5^{I}- 5^{IV}) which are held in the mountings (15', 15") may be tensioned by means of tensioning bolts (8', 8").

5. A bearing arrangement according to Claim 4, characterized in that the tensioning bolts (8', 8") for the supporting rollers (5^{I} - 5^{IV}) are held spherically by spherical discs (9) and ball cups (10).

6. A bearing arrangement according to Claims 1 to 5, characterized in that the end of the worm shaft (2', 2") is constructed as a flange (2''').

7. A bearing arrangement according to Claims 1 to 6, characterized in that anti-fatigue bolts (16) serve to connect the drive shaft (4', 4") to the worm (2', 2").

8. A bearing arrangement according to Claim 6, characterized in that there is an annular gap (21) between the flange (2"') of the worm shaft (2', 2") and the worm housing (3).

9. A bearing arrangement according to Claim 8, characterized in that the rear wall of the worm housing (3) has a channel (22), and in that the channel (22) is connected to the annular gap (21).

10. A bearing arrangement according to Claim 9, characterized in that the channel (22) in the worm housing (3) has at least one outlet.

## Revendications

1. Palier ou logement de l'arbre de commande ou arbre primaire (4',4") d'une extrudeuse à une ou plusieurs vis sans fin (1) destiné à absorber les forces de laminage des vis sans fin (2',2") qui se produisent dans l'utilisation dans le plan des axes de vis sans fin et sont symétriques et opposées entre elles et s'exercent perpendiculairement aux axes des vis sans fin, caractérisé par des rouleaux d'appui (5^{I} et 5^{lv)} qui reposent sur la périphérie des arbres de commande (4',4") et sont agencés autour de ceux-ci de manière à empêcher tout décalage ou déplacement radial de l'arbre de commande.

2. Palier selon la revendication 1, caractérisé en ce que les rouleaux d'appui (5^{I} et 5^{V)} peuvent pivoter autour respectivement d'un axe mécanique(14',14") qui se situe perpendiculairement au plan commun des axes de vis sans fin.

3. Palier selon la revendication 1 et 2, caractérisé en ce que chaque rouleau d'appui 5^{I} et 5^{V} est logé dans une douille (15',15").

4. Palier selon la revendication 3, caractérisé en ce que les rouleaux d'appui logés dans les douilles (15',15') peuvent être serrés par des vis de serrage (8,8').

5. Palier selon la revendication 4, caractérisé en ce que les vis de serrage (8',833) des rouleaux d'appui (5^{I} et 5^{V}) sont logées sphériquement avec des rondelles à portée sphérique (9) et des coussinets sphériques (10).

6. Palier selon les revendications 1 à 5, caractérisé en ce que l'extrémité de l'arbre à vis sans fin (2,2")) est conçu sous la forme d'une bride (2''').

7. Palier selon la revendication 1 à 6, caractérisé en ce que des vis de dilatation (16) servent à relier l'arbre de commande 4',4'') à la vis sans fin (2',2'').

8. Palier selon la revendication 6, caractérisé en ce qu'entre la bride (2''') de l'arbre à vis sans fin (2',2") et le logement de la vis sans fin (3), il est prévu un espace annulaire 21).

9. Palier selon la revendication (8), caractérisé en ce que la paroi arrière du logement à vis sans fin (3) dispose d'un canal (22) et en ce que le canal (22) est relié à l'espace annulaire (21).

10. Palier selon la revendication 9, caractérisé en ce que le canal (22) du logement de la vis sans fin (3) dispose au moins d'une voie d'écoulement.
